# EUROPEAN PATENT SPECIFICATION

(11) **EP 3 874 991 B1**
(45) Date of publication and mention of the grant of the patent: **07.02.2024**
(21) Application number: 21159143.3
(22) Date of filing: 25.02.2021
(51) Int. Cl.: A47B 91/02, F16B 12/18, F16B 12/14

(54) **SIMPLIFIED ADJUSTABLE LEVELLING SYSTEM WITH JOINT FOR FURNITURE AND/OR FURNISHING ITEMS**
VEREINFACHTES VERSTELLBARES NIVELLIERSYSTEM MIT VERBINDUNG FÜR MÖBEL UND/ODER EINRICHTUNGSGEGENSTÄNDE
SYSTÈME DE MISE À NIVEAU RÉGLABLE SIMPLIFIÉ AVEC FIXATION POUR MEUBLES ET/OU ARTICLES D'AMEUBLEMENT

(30) Priority: 03.03.2020 IT 202000001006 U; 26.03.2020 IT 202000001315 U
(43) Date of publication of application: 08.09.2021
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Dragotti & Associati S.R.L.

(56) References cited:
- WO-A1-2017/153175
- WO-A1-2019/049003
- WO-A1-2019/053564
- US-A1- 2019 309 777

## Description

The present invention relates to a simplified adjustable levelling system with joints for furniture and/or furnishing items.

The most diverse levelling systems applicable to furniture suitable for effecting the adjustment of the rear feet applied to the bottom of the furniture are known.

Joining systems are also known which are used in joining furniture parts in the assembly phase, if required by the particular application.

Joining systems may in fact not even be necessary for example in the case of furniture whose shoulders and bottom are glued together.

The document WO2019/053564 discloses a joining and levelling system suitable for being used in furniture and furnishing items (M) with a bottom (12) and at least one shoulder (11) positionable with respect to a floor (P) comprising, in combination, at least one front foot unit (14,114) and at least one rear foot unit (15,115), wherein each front and rear foot unit (14,15; 114,115) comprises at least one connection group (GC) and a blocking group (GB) of a joining device for stably interconnecting the bottom (12) and the at least one shoulder, and a levelling device (21) with a height adjustment mechanism manoeuvrable by means of a tool, wherein said connection group (GC) and a blocking group (GB) and said levelling device (21) can be actuated from the front with respect to the furniture.

The document WO2017/153175 discloses a compact joining and leveling system for parts of furniture and furnishing items (M) with a bottom (12) and a shoulder (11) of the type comprising, in combination, at least one front-foot unit (14) and at least one rear-foot unit (15), wherein each front-and rear-foot unit (14, 15) comprises a leveling group (GL) and a connection group (GC) for stably interconnecting said bottom (12) and at least one shoulder (11) through blocking means (26; 82; 150-152; 160), wherein said leveling group (GL) and said connection group(GC) can be actuated from the front with respect to the piece of furniture through the space between the bottom and the floor.

The document WO2019/049003 discloses a joining and levelling system suitable for being used in furniture and furnishing items (M) with a bottom (12) and at least one shoulder (11) positionable with respect to a floor (P), said system comprising, in combination, at least one front foot unit (14,114) and at least one rear foot unit (15,115), wherein said at least one front foot unit (14,114) and said at least one rear foot unit (15,115) are positionable beneath both said bottom (12) and said at least one shoulder (11), wherein said bottom (12) and said at least one shoulder (11) do not rest on the floor.

Each front and rear foot unit (14,15; 114,115) comprises at least one connection group (GC) and a blocking group (GB) for stably interconnecting said bottom (12) and said at least one shoulder (11), and at least a levelling device (GL) with a height adjustment mechanism manoeuvrable by means of a tool, wherein said levelling device (GL) and said connection (GC) and a blocking groups (GB) can be actuated from the front of the furniture.

The document US 2019/309777 A1 discloses another known system for joining a bottom and a shoulder of a furniture.

The fitter or installer is therefore faced with various different scenarios in which, in addition to the arrangement of levellers, he does not always have to use joining systems between the furniture parts.

Resort must consequently be made to levelling systems and joining systems available on their own or by combining them with the problems that may arise as they have not been designed to be used in combination. Alternatively, resort must be made to different types of products in which the system is of a complex type and provides levelling devices integral with the joints in their construction. This leads to the fact, for example, that various different solutions must be available with consequences relating to storage and the number of relevant products.

A solution is required for example in which adjustment and joining must be effected in a piece of furniture wherein the bottom of the furniture is not so far from the floor. There is naturally also the need for levelling and joining at the rear feet of the furniture. To do this, for example, resort to levelling and joining systems known in the prior art, which provide for the provision and assembly of suitable transmission and adjustment rods for the rear feet and joints, is not desired.

Furthermore, a levelling and possibly a joining system is required that provides for a minimum number of elements in stock and in any case these elements must be simple and easy to assemble and fit according to the specific requirement or the particular furniture.

A further requirement is that of using only normal tools, such as a screwdriver or a simple wrench, in the absence of any particular aid to be positioned on the furniture. As already mentioned, for example, the presence of transmission rods, fixed or supported to the bottom of the furniture, for adjusting the rear feet and/or the rear joint between the parts of the furniture, is to be avoided.

A system should also be found that allows its installation and use that is independent of the width of the furniture base and specific application in which it must be used.

This desired universality and simplification with respect to the numerous elements necessary for constituting and actuating the adjustment system of the rear feet and/or possible joints, are main requirements.

The general objective of the present invention is to provide a simplified adjustable levelling system with joints for furniture and/or furnishing items which is particularly simple with respect to the known systems and allows any specific use required.

A further objective of the present invention is to provide a simplified adjustable levelling system with joints for furniture and/or furnishing items wherein the bottom is detached from the floor and should or should not be associated with the side shoulders.

Another objective of the present invention is to provide a simplified adjustable levelling system with joints for furniture and/or furnishing items which does not provide any transmission rod for actuating the adjustment of the feet of the furniture and/or joining of the parts, in particular the rear parts.

A further objective of the present invention is to provide a simplified adjustable levelling system with joints for furniture and/or furnishing items which is particularly compact and minimizes the elements of which it is composed and also minimizes the constituent elements in stock.

The above-mentioned objectives are achieved by a system having the characteristics indicated in the enclosed claim 1 and the subordinate claims.

The structural and functional characteristics of the present invention and its advantages with respect to the known art can be easily understood from the following description, referring to the attached drawings, which illustrate embodiment examples of the invention itself.

In the drawings:
- figure 1 is a perspective view illustrating an example of a simplified adjustable levelling system with joints for furniture and/or furnishing items produced according to the present invention applied to a base detached from the floor, with the side shoulder and base indicated in section;
- figure 2 is a perspective view similar to that shown in figure 1 wherein the front- and rear-foot units and the front joining group only are shown in section;
- figure 3 is a perspective view from above of a body of a single foot unit with an exploded view of a part of the joining group that can be coupled with the body;
- figure 4 is a perspective view from below of the body of a single foot unit of figures 1 and 3 with part of the coupled joining group;
- figure 5 is a perspective view of a levelling body which can be selectively inserted in the body of figures 3 and 4 to define a front- or rear- foot unit;
- figures 6 and 7 are raised side views of the single front and rear unit with the levelling body of figure 5 inserted and part of the joint;

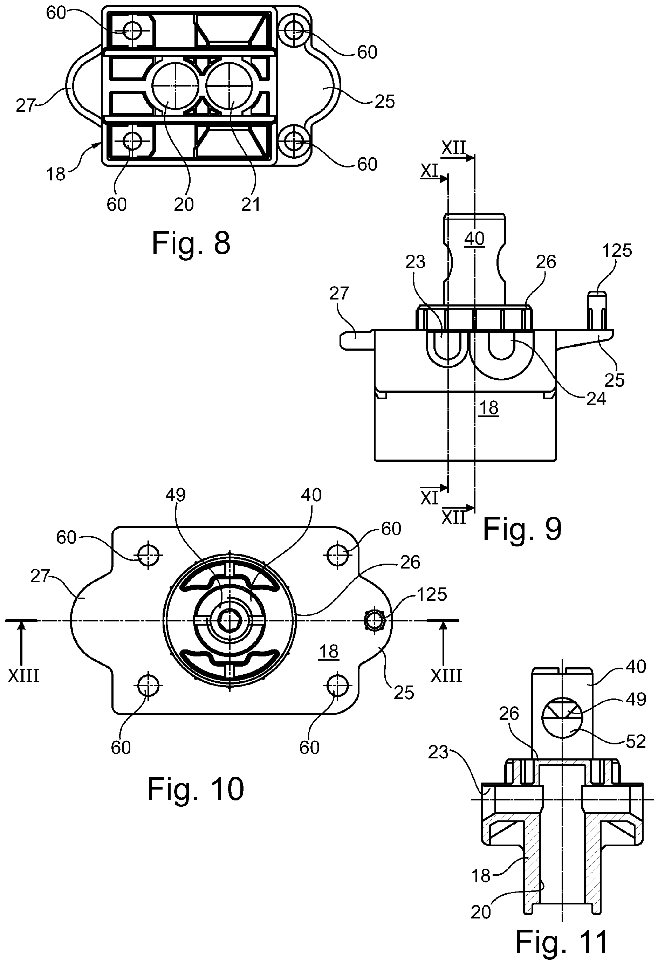

- figures 8, 9 and 10 are a plan view from below, a raised side view and a plan view from above of a body of a single foot unit shown in figure 1;
- figure 11 is a section along the line XI-XI of figure 9;
- figure 12 is a section along the line XII-XII of figure 9;
- figure 12b is an enlarged detail of figure 12;
- figure 13 is a section along the line XIII-XIII of figure 10;
- figure 14 is a perspective view illustrating a second example of a simplified adjustable levelling system with coupled joining groups for furniture and/or furnishing items produced according to the present invention applied to a base detached from the floor, with side shoulder and base indicated in section;
- figure 15 is a perspective view similar to that shown in figure 14 wherein the front- and rear-foot units are shown in section;
- figures 16 to 23 show the different views and sections of a front-foot unit shown in figure 14;
- figures 23 to 30 show the different views and sections of a rear-foot unit shown in figure 14.

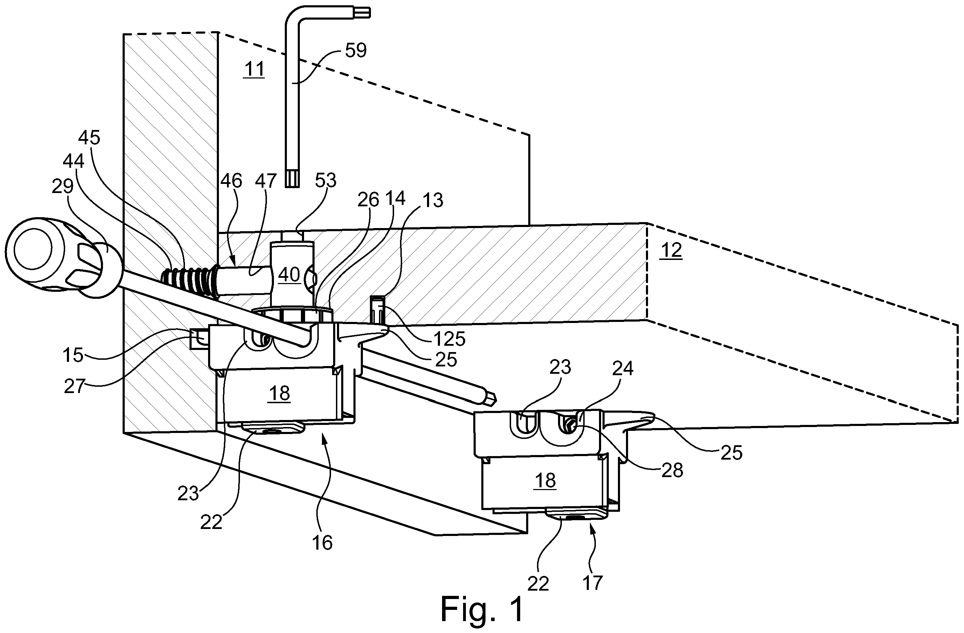

With reference in general to figures 1, 2 and 13, 14, it can be seen that these figures partially illustrate a piece of furniture M equipped with shoulders 11 (sides) - only one of which is shown - associated with a base 12. It can be seen how this base 12 is detached from an underlying floor (not shown) and is associated with said shoulders 11 at a certain height detached from the floor on which the shoulders 11 rest. In this way, a front access is created in order to be able to intervene on the adjustable front and also rear feet.

Indications such as "vertical" and "horizontal", "upper" and "lower" (in the absence of other indications) should be read with reference to the assembly (or operating) conditions and referring to the normal terminology used in current language, where "vertical "indicates a direction substantially parallel to that of the force of gravity vector "g" and a horizontal direction perpendicular to it.

A simplified adjustable levelling system for furniture and/or furnishing items produced according to the present invention which provides for the arrangement of firmly coupled joints, will now be examined.

Each of the shoulders 11 and the bottom 12 are arranged with specific holes 13, 14 and 15 for housing extensions of both front-foot units 16 and rear-foot units 17.

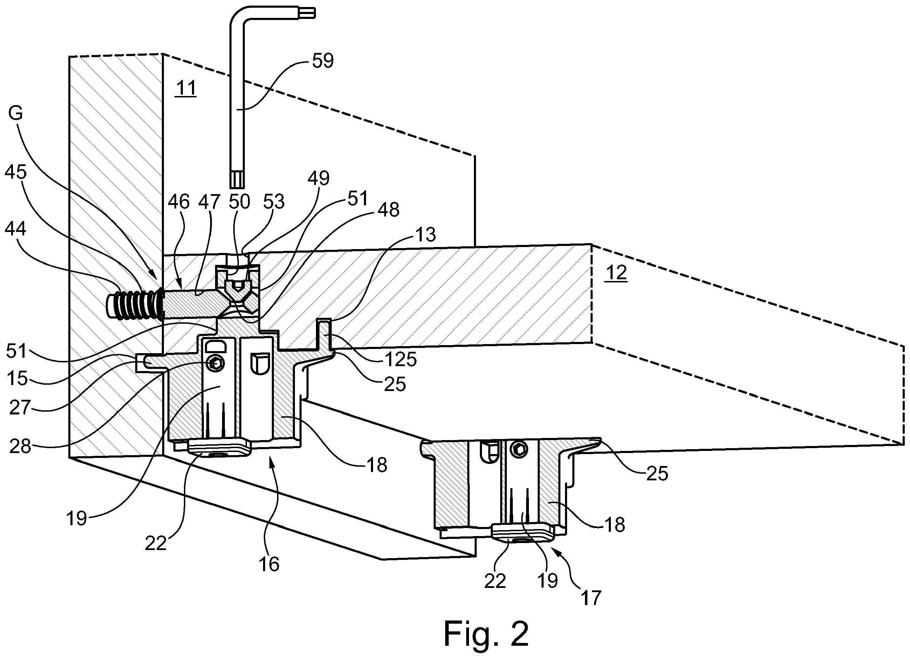

More specifically, figures 1 and 2 show how, in a first example, a front-foot unit 16 and rear-foot unit 17 are fixed at the bottom 12 near one end, and analogously and symmetrically at the other end of the bottom 12 which is not shown.

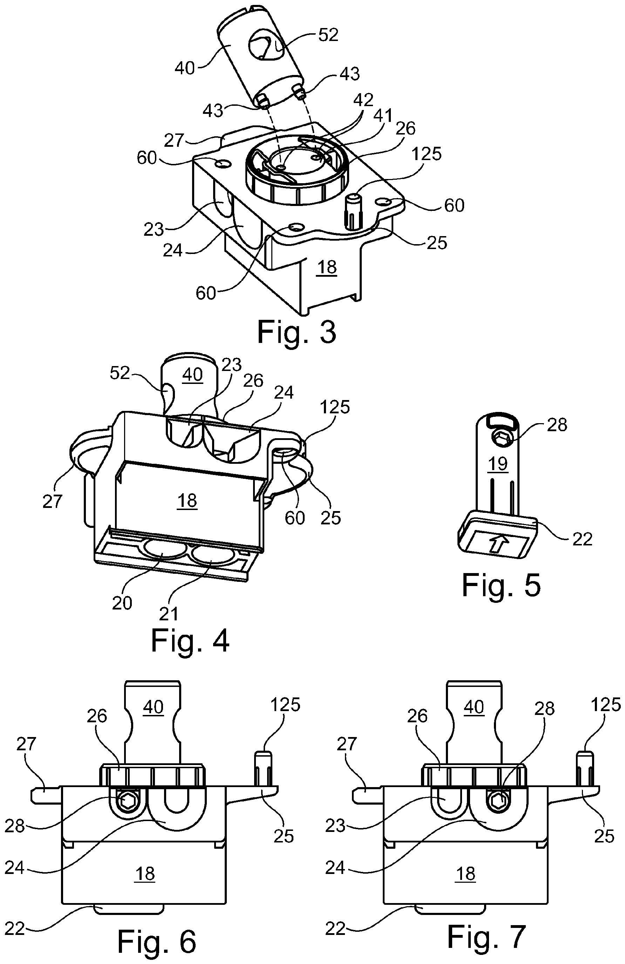

Each foot unit 16, 17 provides a body 18 of a single foot unit and a levelling body 19 respectively (figure 5) which can be selectively inserted into respective housings 20, 21. A body or barrel 40 forming part of a joining group G can be associated with the body 18 to define a front-foot unit 16 or a rear-foot unit 17.

The body 18 of the single foot unit comprises a pair of cylindrical housings 20, 21, adjacent to each other with a vertical axis, wherein a levelling body 19 is housed, containing the various mechanisms suitable for moving a lower support 22 of a foot downwards and/or upwards, as per patent EP733322 of the applicant, in order to effect the levelling. The internal height adjustment mechanism (not shown) is accessible from the outside and acts on the lower supporting part 22 of the foot to adjust it in height.

As also shown in the sections of the example, the body 18, in addition to the vertical housings 20, 21, provides horizontal pass-through holes 23, 24 formed in the upper part of said housings 20, 21, transversely with respect to the body.

It can also be noted that the body 18 of a single foot unit provides extensions 25, 26 and 27 in its upper surface which are inserted into the above-mentioned holes 13, 14 and 15 of the bottom 12 and shoulders 11.

From a first pass-through hole 23, it is possible to directly act with a screwdriver tip on a manoeuvring screw 28 of the levelling body 19 of the front-foot unit 16. The second pass-through hole 24 allows the passage and support of a screwdriver stem 29 (figure 1) which becomes engaged on a manoeuvring screw 28 of the levelling body 19 of the rear-foot unit 17.

For this purpose, the pass-through hole 24 of the front-foot unit 16 is aligned with the hole 24 of the body of the rear-foot unit 17 from which the above-mentioned manoeuvring screw 28 is accessible.

The body 18 of a single foot unit 16 or 17 has been seen to provide a side flap extension 27 which engages in a hole or seat 15 formed in the shoulder 11. A second extension 25 at the opposite end also comprises a portion in the form of a flap on which the bottom 12 rests and also a peg 125 which is inserted in a hole 13 in the bottom 12.

A third extension 26 of the body 18 if present, for example in cylindrical form, is positioned in the hole 14 of the bottom, but alternatively it may not be provided.

According to the system of the present invention, the front- and rear- foot units can be easily adjusted. This can be effected thanks to the presence of the pass-through holes 23, 24 produced in the body which give access to and control the internal height-adjustment mechanism.

The provision of a pair of pass-through holes in the body of the single foot unit achieves on the one hand an immediate intervention on the manoeuvring screw 28 of the levelling body 19 of the front-foot unit 16 and on the other hand a guide and a safe and correct support for the tip of the long-stemmed screwdriver or similar tool for intervening on the rear-foot unit 17.

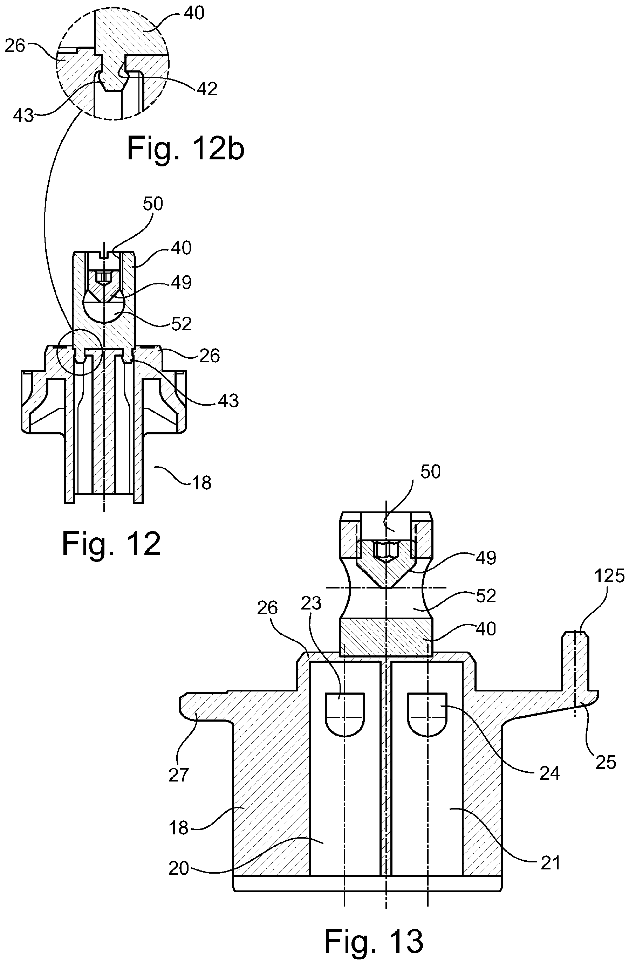

As already indicated, the upper part of the body 18 provides for the cylindrical extension 26 in which a circular seat 41 is formed, equipped with two holes 42 for the snap-insertion of stems 43 which extend from the body or barrel 40 (figure 12b) which is part of the joining group G. In this way the barrel 40 is firmly coupled with the body 18.

Figures 1 and 2, in fact, show as a whole a joining group G when associated with the body 18 of the system according to the invention. The example shows how the shoulder 11 provides a seat in the form of a horizontal blind hole 44 in which a threaded end 45 of a pin 46 is blocked. Alternatively, the hole 44 receives a threaded bush that houses the simple non-threaded pin 46.

The pin 46 is housed in a horizontal hole 47 formed in the bottom 12 of the furniture and aligned with the hole 44 of the shoulder 11. The pin 46 provides in its protruding part a housing 48 for the tip of a blocking grub screw 49. The blocking grub screw 49 is screwed into a vertical internal threaded hole 50 of the barrel 40. The barrel 40 is housed in a vertical hole 51 in the bottom 12, which intersects the horizontal hole 47. The pin 46 is positioned in a horizontal hole 52 formed in the barrel 40 and to be aligned with the holes 44 and 47 of the shoulder and bottom. In this way, the joint is obtained thanks to the joining group G between the shoulder 11 and the bottom 12. A tool, such as an Allen key 59 (figures 1 and 2), is used for tightening the grub screw 49 in the housing 48 of the pin 46, blocking, with the joining group, the shoulder 11 with respect to the bottom or base 12 of the furniture M passing through a small hole 53 formed in the upper part of the base 12. The hole 53, as already indicated, is formed in the upper part of the base 12 axially aligned with the vertical hole 51 of the base 12.

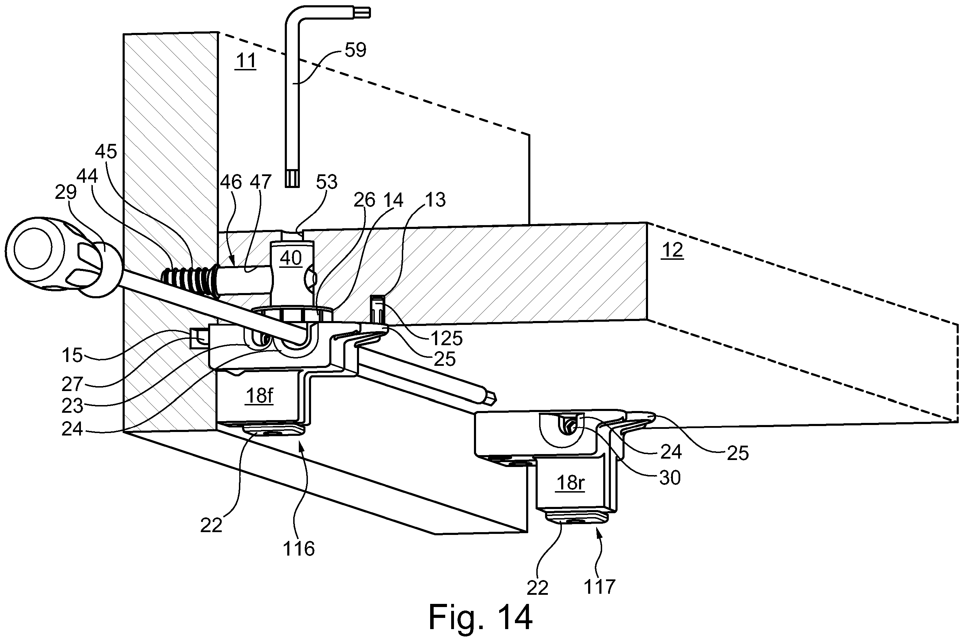

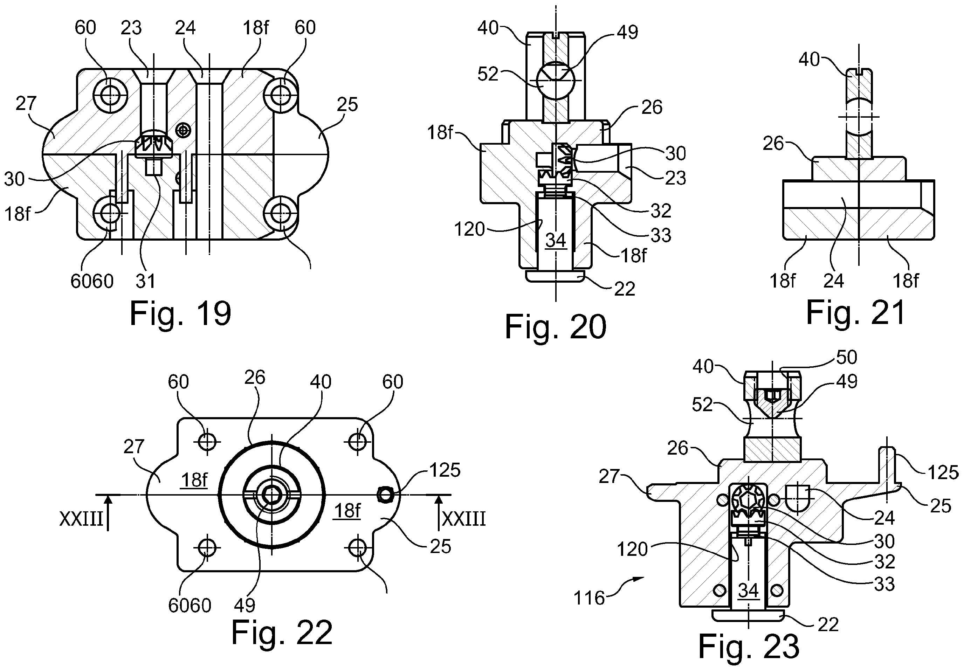

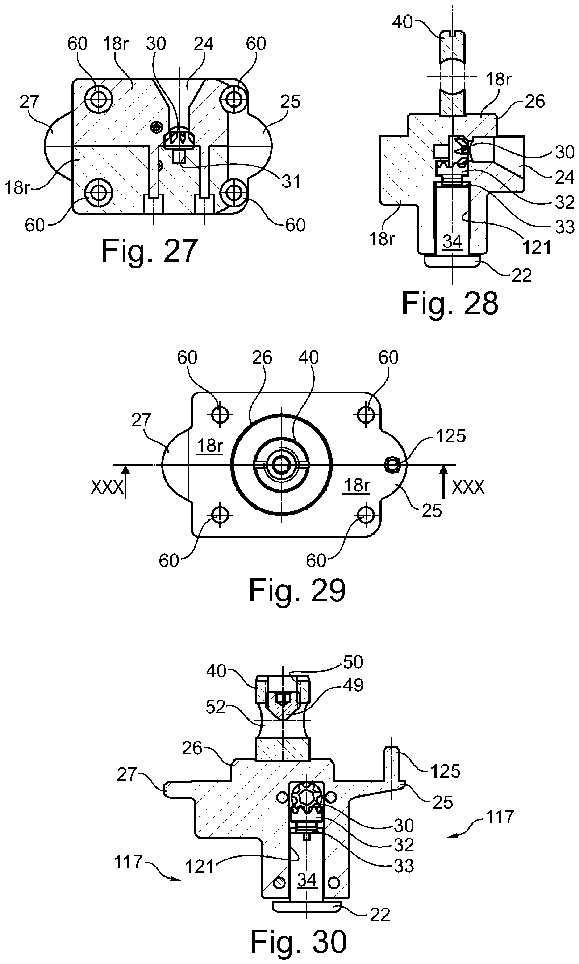

Figures 14 to 30 show, as already mentioned, a further exemplification of a simplified adjustable levelling system with joints for furniture and/or furnishing items.

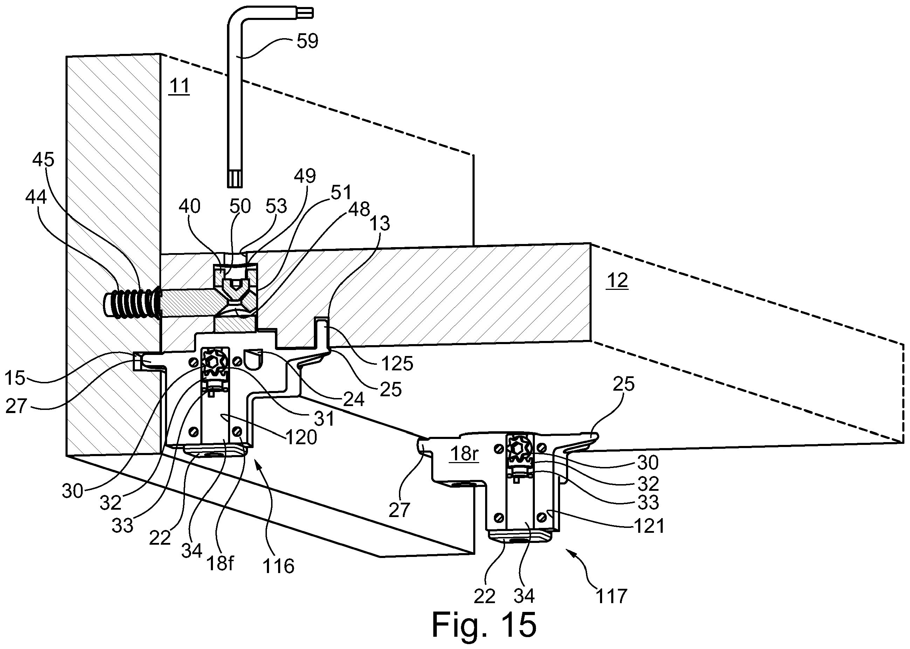

In this example, in which the same elements are indicated with the same reference numbers or preceded by a "1", the levelling body 19 of the foot unit inserted in the body is replaced by a levelling mechanism directly arranged and blocked inside the same. Here again (figures 14 and 15), a front-foot unit 116 and a rear-foot unit 117 are fixed at the bottom 12 near one end, as is also the case symmetrically at the other end of the bottom 12 which is not shown.

Each foot unit 116, 117 provides a body 18f and 18r containing its specific internal height-adjustment mechanism accessible from the outside which acts on the lower supporting part 22 of the foot for adjusting it in height.

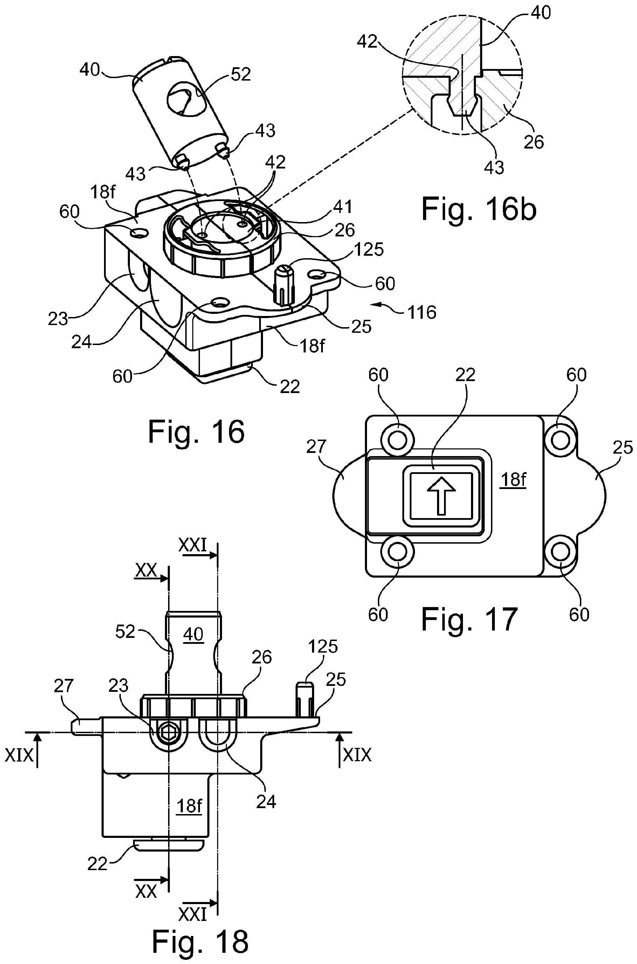

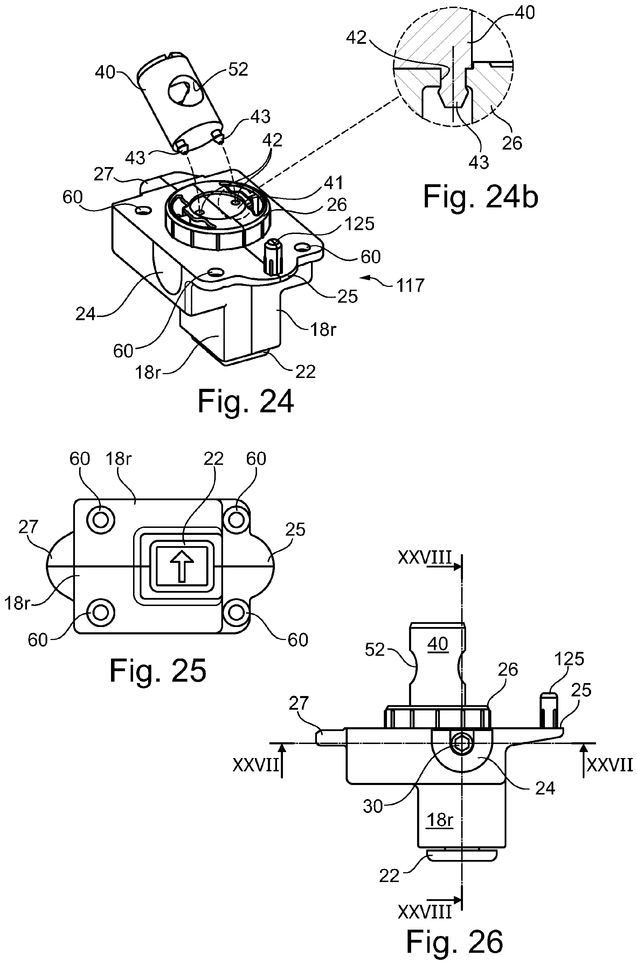

There is therefore the provision that in both cases the body 18f or 18r of the single front- or rear-foot unit provides at least a part with a casing in two half-shells (figures 16 and 24) which contains a pinion-toothed crown bevel gear. A pinion 30 is rotatingly positioned inside a hole 31 obtained in one of the two half-shells of the body 18f or 18r. The recessed head of the pinion 30 is aligned with the respective hole 23 or 24 of the body of the single front-foot unit 116 or rear-foot unit 117.

The pinion 30 becomes engaged with a toothed crown 32, formed as the head of a threaded screw 33 engaged in a threaded hole (not shown) axial and internal with respect to a foot element 34 which ends with a lower supporting part 22. The foot element 34 can be moved within a seat formed in the two coupled half-shells of the body. The foot element 34 is, as already mentioned, movable or sliding so as to be adjustable in height within the housing 120 or 121 or seat formed in the body 18f or 18r.

Figure 14 shows how it is possible to intervene on the front-foot 116 or rear-foot 117 units.

The front-foot unit 116, in fact, provides, in the body 18f, the first hole 23 through which it is possible to directly act with a screwdriver tip on the pinion 30. The second pass-through hole 24 is also provided in the body 18f, which allows the introduction, passage and support of a stem of a screwdriver 29 (figure 14) which, after passing through the hole 24, becomes engaged in a pinion 30 positioned in the body 18r of the rear-foot unit 117. Acting on this also promotes the rear adjustment of the system of the present invention and it can be noted that there is no need however for the first hole 23 present in the front-foot unit 116.

Also in this example, the body 18f or the body 18r of a single foot unit 116 or 117 provides for the side flap extension 27 which engages in a hole or seat 15 formed in the shoulder 11. The second extension 25 is also provided at the opposite end of the body which comprises a flap-shaped portion on which the bottom 12 rests in addition to a peg 125 which is inserted in a hole 13 of the bottom 12.

Finally, as previously mentioned, the third extension 26 of the body 18f or 18r, for example in cylindrical form, is positioned in the hole 14 in the bottom, but alternatively it may not be provided.

It should also be noted that in the various embodiments the body 18, 18f or 18r has holes 60 for fixing to the bottom 12 of the furniture M, for example by means of screws or other fixing means.

It should be pointed out that the joining group G is completely identical to that described for the first example of the system. The body 18f or 18r therefore provides for the cylindrical extension 26 in which a circular seat 41 is formed, equipped with two holes 42 for the snap-insertion of stems 43 which extend from the body or barrel 40 (figure 16b front-foot unit 116 and figure 24b rear-foot unit 117. In this way, the barrel 40 is firmly coupled with the body 18f or 18r.

This thus simplifies any adjustment operation of the rear-foot unit, both for levelling and joining, also in extremely limited spaces. The above-mentioned adjustment of both the levelling and joining is more immediate for the front-foot unit.

This provision also allows the elimination of any further element, such as extensions, transmissions or guides, which serve to ensure the correct direction or orientation of the screwdriver which must be present in the additional known systems fixed to the bottom of the furniture.

According to the present invention, there is the significant advantage of having a system that has the possibility of managing a single element with which the joint G is associated, as required. There are in fact companies that produce both disassembled furniture that are specifically joined with joints, and furniture whose shoulders-bottom are glued together. With the solution according to the present invention it is possible to customize a single system by adding or removing the joint as required.

In the embodiment of the invention illustrated, the piece of furniture M is provided with a pair of front-foot units and a pair of rear-foot units. The provisions of the present invention however can also be applied to a piece of furniture M equipped with a single front-foot unit and a single rear-foot unit.

In addition, as can be clearly seen from the figures, the openings of the entry holes of the screwdriver or similar operating tool are flared in order to facilitate the rapid and correct introduction of the tool itself.

The objectives mentioned in the preamble of the description have thus been achieved.

The protection scope of the present invention is defined by the enclosed claims.

## Claims

1. A simplified adjustable levelling system with joints for furniture and/or furnishing items (M) with a bottom (12) and shoulders (11) of the type comprising, in combination: at least one front-foot unit (16,116) and at least one rear-foot unit (17,117), wherein said at least one front-foot unit (16,116) or rear-foot unit (17,117) has a height adjustment mechanism which is accessible from the outside of the foot and can be manoeuvred by means of a tool (29), wherein said system provides that in said at least one front-foot unit (16,116) and at least one rear-foot unit (17,117), the adjustment mechanism can be actuated from the front by means of a tool or screwdriver, wherein a body (18,18f,18r) of at least one front-foot unit (16,116) provides a pair of adjacent holes (23,24), one (23) for actuating said height adjustment mechanism of said at least one front-foot unit (16,116) and the other (24) passing through said body (18, 18f, 18r) to act as a support and guide for said tool (29) for actuating said height adjustment mechanism of said at least one rear-foot unit (17,117), a joining group (G) also being provided, which can be positioned between said bottom and said shoulder and can be firmly coupled with the body (18;18f,18r) of said at least one front-foot unit (16,116) and rear-foot unit (17,117), wherein said joining group (G), which can be positioned between said bottom and said shoulder and can be firmly snap-coupled (42,43) above the body (18;18f,18r) of said at least one front-foot unit (16,116) and rear-foot unit (17,117), comprises a barrel (40) which becomes engaged in a pin (46) which can be inserted in said shoulder (11) and said bottom (12) with a blocking grub screw (49) which can be screwed into said barrel (40), said blocking grub screw (49) being screwed into a vertical internal threaded hole (50) of the barrel (40), said system comprising said blocking grub-screw (49), said pin (46) and said barrel (40).

2. The system according to claim 1, **characterized in that** said piece of furniture (M) comprises a pair of front-foot units (16,116) and a pair of rear-foot units (17,117).

3. The system according to claim 1 or 2, **characterized in that** each body (18,18f,18r) of said at least one front-foot unit (16,116) and at least one rear-foot unit (17,117) provides at least two extensions (25,26,27) which are insertable into respective holes or seats (13,14,15) of said bottom (12) and of said shoulders (11).

4. The system according to claim 3, **characterized in that** said extensions comprise a first side flap extension (27) from said body (18, 18f, 18r) which can engage in a hole or seat (15) formed in the shoulder (11).

5. The system according to claim 3 or 4, **characterized in that** said extensions comprise a second extension (25) at an opposite end of said body (18,18f,18r) with respect to the position of said first side flap extension (27), which is a flap-shaped portion on which the bottom (12) can rest and also a peg (125) which is inserted into a hole (13) in the bottom (12) .

6. The system according to claim 3, 4 or 5, **characterized in that** said extensions comprise a third extension (26) of said body (18,18f,18r) which extends above it and is positionable in a hole (14) of the bottom (12).

7. The system according to one or more of the previous claims, **characterized in that** each body (18) of said at least one front-foot unit (16) and at least one rear-foot unit (17) comprises a selectively insertable levelling body (19) in respective housings (20,21).

8. The system according to claim 7, **characterized in that** said housings (20,21) are cylindrical, adjacent with a vertical axis, wherein said levelling body (19) is housed, containing mechanisms suitable for moving a lower supporting part (22) of a foot downwards and/or upwards.

9. The system according to one or more of the previous claims 1 to 6, **characterized in that** the body (18f,18r) of said front-foot unit (116) and a rear-foot unit (117) contains an internal height-adjustment mechanism accessible from the outside which acts on a lower supporting part (22) of the foot for adjusting it in height, wherein said body (18f,18r) comprises a casing in two half-shells.

10. The system according to claim 9, **characterized in that** said mechanism comprises a pinion-toothed crown bevel pair, wherein a pinion (30) can be actuated from a hole (23 or 24) formed in said body (18f,18r), wherein said pinion (30) engages with a toothed crown (32), formed as the head of a threaded screw (33) engaged in an axial threaded hole and inside a foot element (34) which ends with a lower supporting part (22), said foot element (34) being translatable in a seat formed in said two coupled half-shells of said body (18f,18r) and also sliding and adjustable in height.

11. The system according to one or more of the previous claims, **characterized in that** said joining group (G) comprises a horizontal blind hole (44) in said shoulder (11) in which a threaded end (45) of said pin (46) is arranged, which is housed in a horizontal hole (47) formed in the bottom (12) aligned with the hole (44) of the shoulder (11), wherein said barrel (40) is housed in a vertical hole (51) of the bottom (12), which intersects the horizontal hole (47).

12. The system according to one or more of the previous claims , **characterized in that** said pin (46) provides in its protruding part a housing (48) for a tip of said blocking grub screw (49).

13. The system according to one or more of the previous claims , **characterized in that** said pin (46) is positioned in a horizontal hole (52) formed in the barrel (40) and which intersects with a vertical internal threaded hole (50) of the barrel (40).

14. The system according to one or more of the previous claims , **characterized in that** said blocking grub screw (49) can be actuated by means of a tool (59) which passes through a hole (53) formed in the upper part of the bottom (12) axially aligned with a vertical hole (51) of the bottom (12).

15. The system according to one or more of the previous claims, **characterized in that** each body (18,18f,18r) of said at least one front-foot unit (16,116) and at least one rear-foot unit (17,117) has holes (60) for fixing to the bottom (12) of the furniture (M).

## Patentansprüche

1. Vereinfachtes, einstellbares Nivellierungssystem mit Gelenken für Möbel und/oder Einrichtungsgegenstände (M) mit einem Boden (12) und Schultern (11) des Typs, der in Kombination umfasst:
mindestens eine Vorderfußeinheit (16, 116) und mindestens eine Rückfußeinheit (17, 117), wobei die mindestens eine Vorderfußeinheit (16, 116) oder Rückfußeinheit (17, 117) einen Höheneinstellmechanismus aufweist, der von der Außenseite des Fußes zugänglich und mittels eines Werkzeugs (29) betätigbar ist,
wobei das System vorsieht, dass in der mindestens einen Vorderfußeinheit (16, 116) und der mindestens einen Rückfußeinheit (17, 117) der Einstellmechanismus von vorne mittels eines Werkzeugs oder Schraubendrehers betätigt werden kann, wobei ein Körper (18, 18f, 18r) der mindestens einen Vorderfußeinheit (16, 116) ein Paar von benachbarten Löchern (23, 24) vorsieht, von denen eines (23) zum Betätigen des Höheneinstellmechanismus der mindestens einen Vorderfußeinheit (16, 116) dient und das andere (24) durch den Körper (18, 18f, 18r) hindurchgeht, um als Halterung und Führung für das Werkzeug (29) zum Betätigen des Höheneinstellmechanismus der mindestens einen Rückfußeinheit (17, 117) zu dienen,
wobei auch eine Verbindungsgruppe (G) vorgesehen ist, die zwischen dem Boden und der Schulter positioniert werden kann und fest mit dem Körper (18; 18f, 18r) der mindestens einen Vorderfußeinheit (16, 116) und Rückfußeinheit (17, 117) gekoppelt werden kann,
wobei die Verbindungsgruppe (G), die zwischen dem Boden und der Schulter positioniert werden kann und über dem Körper (18; 18f, 18r) der mindestens einen Vorderfußeinheit (16, 116) und Rückfußeinheit (17, 117) fest eingerastet (42, 43) werden kann, einen Schaft (40) umfasst, der in einem Stift (46), der in die Schulter (11) und den Boden (12) eingesetzt werden kann, mit einem blockierenden Gewindestift (49) in Eingriff gerät, der in den Schaft (40) geschraubt werden kann, wobei der blockierende Gewindestift (49) in ein vertikales Innengewindeloch (50) des Schafts (40) geschraubt wird, wobei das System den blockierenden Gewindestift (49), den Stift (46) und den Schaft (40) umfasst.

2. System nach Anspruch 1, **dadurch gekennzeichnet, dass** das Möbelstück (M) ein Paar von Vorderfußeinheiten (16, 116) und ein Paar von Rückfußeinheiten (17, 117) umfasst.

3. System nach einem der Ansprüche 1 oder 2, **dadurch gekennzeichnet, dass** jeder Körper (18, 18f, 18r) der mindestens einen Vorderfußeinheit (16, 116) und der mindestens einen Rückfußeinheit (17, 117) mindestens zwei Verlängerungen (25, 26, 27) bereitstellt, die in entsprechende Löcher oder Sitze (13, 14, 15) des Bodens (12) und der Schultern (11) einsetzbar sind.

4. System nach Anspruch 3, **dadurch gekennzeichnet, dass** die Verlängerungen eine erste seitliche Klappenverlängerung (27) von dem Körper (18, 18f, 18r) umfassen, die mit einem Loch oder einem Sitz (15) in Eingriff treten kann, der in der Schulter (11) ausgebildet ist.

5. System nach einem der Ansprüche 3 oder 4, **dadurch gekennzeichnet, dass** die Verlängerungen eine zweite Verlängerung (25) an einem gegenüberliegenden Ende des Körpers (18, 18f, 18r) in Bezug auf die Position der ersten seitlichen Klappenverlängerung (27), die ein klappenförmiger Abschnitt ist, auf dem der Boden (12) aufliegen kann, und auch einen Zapfen (125) umfassen, der in ein Loch (13) im Boden (12) eingesetzt wird.

6. System nach einem der Ansprüche 3, 4 oder 5, **dadurch gekennzeichnet, dass** die Verlängerungen eine dritte Verlängerung (26) des Körpers (18, 18f, 18r) umfassen, die sich über diesen erstreckt und in einem Loch (14) des Bodens (12) positionierbar ist.

7. System nach einem der vorhergehenden Ansprüche, **dadurch gekennzeichnet, dass** jeder Körper (18) der mindestens einen Vorderfußeinheit (16) und der mindestens einen Rückfußeinheit (17) einen selektiv einsetzbaren Nivellierkörper (19) in entsprechenden Gehäusen (20, 21) umfasst.

8. System nach Anspruch 7, **dadurch gekennzeichnet, dass** die Gehäuse (20, 21) zylindrisch sind und benachbart einer vertikalen Achse liegen, in denen der Nivellierkörper (19) untergebracht ist, der Mechanismen enthält, die geeignet sind, einen unteren Stützteil (22) eines Fußes nach unten und/oder nach oben zu bewegen.

9. System nach einem der Ansprüche 1 bis 6, **dadurch gekennzeichnet, dass** der Körper (18f, 18r) der Vorderfußeinheit (116) und einer Rückfußeinheit (117) einen internen, von außen zugänglichen Höheneinstellmechanismus enthält, der auf einen unteren Stützteil (22) des Fußes wirkt, um ihn in der Höhe zu verstellen, wobei der Körper (18f, 18r) eine Umhüllung in zwei Halbschalen umfasst.

10. System nach Anspruch 9, **dadurch gekennzeichnet, dass** der Mechanismus einen mit einem Ritzel verzahnt gepaarten Zahnkranz in Schrägverzahnung umfasst, wobei ein Ritzel (30) von einem in dem Körper (18f, 18r) ausgebildeten Loch (23 oder 24) aus betätigt werden kann,
wobei das Ritzel (30) mit einem Zahnkranz (32) in Eingriff steht, der als Kopf einer Gewindeschraube (33) ausgebildet ist, die mit einer axialen Gewindebohrung und einem Fußelement (34) in Eingriff steht, das mit einem unteren Stützteil (22) endet, wobei das Fußelement (34) in einem Sitz bewegbar ist, der in den beiden gekoppelten Halbschalen des Körpers (18f, 18r) ausgebildet ist, und auch in der Höhe verschiebbar und einstellbar ist.

11. System nach einem der vorhergehenden Ansprüche, **dadurch gekennzeichnet, dass** die Verbindungsgruppe (G) ein horizontales Sackloch (44) in der Schulter (11) umfasst, in dem ein Gewindeende (45) des Stifts (46) angeordnet ist, der in einem horizontalen Loch (47) untergebracht ist, das im Boden (12) ausgebildet ist und mit dem Loch (44) der Schulter (11) ausgerichtet ist, wobei der Schaft (40) in einem vertikalen Loch (51) des Bodens (12) untergebracht ist, das das horizontale Loch (47) schneidet.

12. System nach einem der vorhergehenden Ansprüche, **dadurch gekennzeichnet, dass** der Stift (46) in seinem vorstehenden Teil ein Gehäuse (48) für eine Spitze des blockierenden Gewindestiftes (49) aufweist.

13. System nach einem der vorhergehenden Ansprüche, **dadurch gekennzeichnet, dass** der Stift (46) in einem horizontalen Loch (52) positioniert ist, das in dem Schaft (40) ausgebildet ist und das sich mit einem vertikalen Innengewindeloch (50) des Schafts (40) schneidet.

14. System nach einem der vorhergehenden Ansprüche, **dadurch gekennzeichnet, dass** der blockierende Gewindestift (49) mit Hilfe eines Werkzeugs (59) betätigt werden kann, das durch ein im oberen Teil des Bodens (12) ausgebildetes Loch (53) hindurchgeht, das axial mit einem vertikalen Loch (51) des Bodens (12) ausgerichtet ist.

15. System nach einem der vorhergehenden Ansprüche, **dadurch gekennzeichnet, dass** jeder Körper (18, 18f, 18r) der mindestens einen Vorderfußeinheit (16, 116) und der mindestens einen Rückfußeinheit (17, 117) Löcher (60) zur Befestigung am Boden (12) des Möbels (M) aufweist.

## Revendications

1. Système de mise à niveau réglable simplifié avec fixations pour meubles et/ou articles d'ameublement (M) avec un fond (12) et des épaulements (11) du type comprenant, en combinaison : au moins une unité de pied avant (16, 116) et au moins une unité de pied arrière (17, 117), dans lequel ladite au moins une unité de pied avant (16, 116) ou unité de pied arrière (17, 117) comporte un mécanisme de réglage en hauteur qui est accessible depuis l'extérieur du pied et peut être manoeuvré au moyen d'un outil (29), dans lequel ledit système prévoit que dans ladite au moins une unité de pied avant (16, 116) et au moins une unité de pied arrière (17, 117), le mécanisme de réglage puisse être actionné depuis l'avant au moyen d'un outil ou d'un tournevis, dans lequel un corps (18, 18f, 18r) d'au moins une unité de pied avant (16, 116) présente une paire de trous adjacents (23, 24), l'un (23) pour actionner ledit mécanisme de réglage en hauteur de ladite au moins une unité de pied avant (16, 116) et l'autre (24) traversant ledit corps (18, 18f, 18r) pour servir de support et de guide audit outil (29) afin d'actionner ledit mécanisme de réglage en hauteur de ladite au moins une unité de pied arrière (17, 117), un groupe de fixation (G) étant également prévu, lequel peut être positionné entre ledit fond et ledit épaulement et peut être fermement couplé au corps (18 ; 18f, 18r) de ladite au moins une unité de pied avant (16, 116) et unité de pied arrière (17, 117), dans lequel ledit groupe de fixation (G), qui peut être positionné entre ledit fond et ledit épaulement et peut être fermement couplé par encliquetage (42, 43) au-dessus du corps (18 ; 18f, 18r) de ladite au moins une unité de pied avant (16, 116) et unité de pied arrière (17,117), comprend un cylindre (40) qui vient s'engager dans une broche (46) pouvant être insérée dans ledit épaulement (11) et ledit fond (12) avec une vis sans tête de blocage (49) qui peut être vissée dans ledit cylindre (40), ladite vis sans tête de blocage (49) étant vissée dans un trou fileté interne vertical (50) du cylindre (40), ledit système comprenant ladite vis sans tête de blocage (49), ladite broche (46) et ledit cylindre (40).

2. Système selon la revendication 1, **caractérisé en ce que** ledit article d'ameublement (M) comprend une paire d'unités de pied avant (16, 116) et une paire d'unités de pied arrière (17, 117).

3. Système selon l'une quelconque des revendications 1 ou 2, **caractérisé en ce que** chaque corps (18, 18f, 18r) de ladite au moins une unité de pied avant (16, 116) et au moins une unité de pied arrière (17, 117) présente au moins deux extensions (25, 26, 27) qui peuvent être insérées dans des trous ou sièges respectifs (13, 14, 15) dudit fond (12) et desdits épaulements (11).

4. Système selon la revendication 3, **caractérisé en ce que** lesdites extensions comprennent une première extension de languette latérale (27) à partir dudit corps (18, 18f, 18r) qui peut venir en prise dans un trou ou siège (15) formé dans l'épaulement (11).

5. Système selon la revendication 3 ou 4, **caractérisé en ce que** lesdites extensions comprennent une deuxième extension (25) au niveau d'une extrémité opposée dudit corps (18, 18f, 18r) par rapport à la position de ladite première extension de languette latérale (27), qui est une partie en forme de languette sur laquelle peut reposer le fond (12) et également une cheville (125) qui peut être insérée dans un trou (13) dans le fond (12).

6. Système selon la revendication 3, 4 ou 5, **caractérisé en ce que** lesdites extensions comprennent une troisième extension (26) dudit corps (18, 18f, 18r) qui s'étend au-dessus de lui et peut être positionnée dans un trou (14) du fond (12).

7. Système selon une ou plusieurs des revendications précédentes, **caractérisé en ce que** chaque corps (18) de ladite au moins une unité de pied avant (16) et au moins une unité de pied arrière (17) comprend un corps de mise à niveau sélectivement insérable (19) dans les logements respectifs (20, 21).

8. Système selon la revendication 7, **caractérisé en ce que** lesdits logements (20, 21) sont cylindriques, adjacents à un axe vertical, dans lesquels est logé ledit corps de mise à niveau (19), contenant des mécanismes adaptés pour déplacer une partie de support inférieure (22) d'un pied vers le bas et/ou vers le haut.

9. Système selon une ou plusieurs des revendications précédentes 1 à 6, **caractérisé en ce que** le corps (18f, 18r) de ladite unité de pied avant (116) et une unité de pied arrière (117) contient un mécanisme de réglage en hauteur interne accessible de l'extérieur qui agit sur une partie de support inférieure (22) du pied pour son réglage en hauteur, dans lequel ledit corps (18f, 18r) comprend un boîtier en deux demi-coques.

10. Système selon la revendication 9, **caractérisé en ce que** ledit mécanisme comprend une paire de chanfrein de couronne dentée-pignon, dans lequel un pignon (30) peut être actionné à partir d'un trou (23 ou 24) formé dans ledit corps (18f, 18r), dans lequel ledit pignon (30) vient en prise avec une couronne dentée (32), formée comme la tête d'une vis filetée (33) en prise dans un trou fileté axial et à l'intérieur d'un élément de pied (34) qui se termine par une partie de support inférieure (22), ledit élément de pied (34) pouvant être translaté dans un siège formé dans lesdites deux demi-coques couplées dudit corps (18f, 18r) et étant également coulissant et réglable en hauteur.

11. Système selon une ou plusieurs des revendications précédentes, **caractérisé en ce que** ledit groupe de fixation (G) comprend un trou borgne horizontal (44) dans ledit épaulement (11) dans lequel une extrémité filetée (45) de ladite broche (46) est agencée, qui est logé dans un trou horizontal (47) ménagé dans le fond (12) aligné avec le trou (44) de l'épaulement (11), dans lequel ledit cylindre (40) est logé dans un trou vertical (51) du fond (12) qui coupe le trou horizontal (47).

12. Système selon une ou plusieurs des revendications précédentes, **caractérisé en ce que** ladite goupille (46) présente dans sa partie saillante un logement (48) pour une pointe de ladite vis sans tête de blocage (49).

13. Système selon une ou plusieurs des revendications précédentes, **caractérisé en ce que** ladite goupille (46) est positionnée dans un trou horizontal (52) formé dans le cylindre (40) et qui coupe un trou fileté interne vertical (50) du cylindre (40).

14. Système selon une ou plusieurs des revendications précédentes, **caractérisé en ce que** ladite vis sans tête de blocage (49) peut être actionnée au moyen d'un outil (59) qui traverse un trou (53) ménagé dans la partie supérieure du fond (12) aligné axialement avec un trou vertical (51) du fond (12).

15. Système selon une ou plusieurs des revendications précédentes, **caractérisé en ce que** chaque corps (18, 18f, 18r) de ladite au moins une unité de pied avant (16, 116) et au moins une unité de pied arrière (17, 117) comporte des trous (60) pour fixation au fond (12) du meuble (M).
